# EUROPEAN PATENT APPLICATION

(11) **EP 4 796 250 A1**
(43) Date of publication of application: **26.08.2026**
(21) Application number: 25217998.1
(22) Date of filing: 24.11.2025
(51) Int. Cl.: B23K 20/10, H01M 10/04, H01M 50/566, B29C 65/08

(54) **WELDING DEVICE AND ELECTRODE ASSEMBLY MANUFACTURED USING THE WELDING DEVICE**

(30) Priority: 21.02.2025 KR 20250022681
(71) Applicant: SAMSUNG SDI CO., LTD., Yongin-si, Gyeonggi-do 17084 (KR)
(72) Inventor: SHIN, Eunhyeok, 17084 Yongin-si, Gyeonggi-do (KR); JEONG, Taesu, 17084 Yongin-si, Gyeonggi-do (KR); YOON, Jungah, 17084 Yongin-si, Gyeonggi-do (KR)
(74) Representative: Bardehle Pagenberg Partnerschaft mbB Patentanwälte Rechtsanwälte

(57) **Abstract**

A welding device (1000) includes an anvil (1100), and a welding horn (1200) configured to apply ultrasound to weld an electrode plate (100a), a first substrate tab (120), and a second substrate tab (130) together, while pressing the electrode plate (100a), the first substrate tab (120), and the second substrate tab (130) on the anvil (1100). The welding horn (1200) includes a disk-shaped welding head (1300), and a body portion (1400) connected to a central axis of the welding head (1300), wherein the welding head (1300) is rotatable. The disk-shaped welding head (1300) includes a first pressing portion (1310) configured to press a first region located between the electrode plate (100a) and the first substrate tab (120), and a second region located between the electrode plate (100a) and the second substrate tab (130) between the anvil (1100) and the welding horn (1200), and a second pressing portion (1320) configured to press part of a third region located between the first substrate tab (120) and the second substrate tab (130).

## Description

### BACKGROUND

### 1. FIELD

The present disclosure relates to a welding device and to an electrode assembly manufactured using the welding device.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility-scale power storage). A secondary battery generally includes an electrode assembly composed of a positive electrode and a negative electrode, a case accommodating the same, and electrode terminals connected to the electrode assembly.

As a material for manufacturing electrodes of a conventional electrode assembly, copper or aluminum has been used. However, when aluminum is used, contact with a negative-electrode active material upon occurrence of a short circuit may lead to ignition.

To address this problem, a method of manufacturing an electrode is disclosed herein that includes a composite substrate having metal layers disposed on both surfaces of a polymer insulation layer such as polyethylene terephthalate (PET), and there is a demand for a method capable of electrically conducting current between the metal layers disposed on both surfaces of the insulation layer.

The above information disclosed in this Background section is for enhancement of understanding of the background of the present disclosure, and therefore, it may contain information that does not constitute related (or prior) art.

### SUMMARY

An aspect of the present disclosure is to provide a welding device and an electrode assembly manufactured using the welding device, capable of solving the above-described problems.
According to the present invention, a welding device and an electrode assembly as claimed in claims 1 and 8 are provided. Preferred embodiments of the invention are described in the dependent claims.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an embodiment for solving the technical problems described above, a welding device includes an anvil, and a welding horn configured to apply ultrasound to weld an electrode plate, a first substrate tab, and a second substrate tab together, while pressing the electrode plate, the first substrate tab, and the second substrate tab on the anvil, wherein the welding horn includes a disk-shaped welding head, and a body portion connected to a central axis of the disk-shaped welding head, wherein the disk-shaped welding head is rotatable around the central axis, wherein the disk-shaped welding head includes a first pressing portion configured to press (1) a first region located between the electrode plate and the first substrate tab between the anvil and the welding horn, and (2) a second region located between the electrode plate and the second substrate tab between the anvil and the welding horn, and a second pressing portion configured to press part of a region between the first substrate tab and the second substrate tab between the anvil and the welding horn.

In some embodiments, the electrode plate may include an insulation layer and, a first metal layer disposed on a first surface of the insulation layer, the first metal layer comprising a first metal layer non-coated portion, and a second metal layer disposed on a second surface of the insulation layer, the second metal layer comprising a second metal layer non-coated portion, wherein: the first pressing portion is configured to press: (1) a fourth region located between the first metal layer non-coated portion and the first substrate tab between the anvil and the welding horn, and (2) a fifth region located between the second metal layer non-coated portion and the second substrate tab between the anvil and the welding horn,.

In some embodiments, the first pressing portion may be continuously formed along a circumference of an outer peripheral surface of the disk-shaped welding head while pressing the electrode plate, the first substrate tab, and the second substrate tab between the anvil and the welding horn, the first pressing portion having a predetermined width, and the second pressing portion may include a plurality of second pressing portions that extend in pairs from the first pressing portion in a direction orthogonal to a circumferential direction of the outer peripheral surface.

In some embodiments, the plurality of second pressing portions may be spaced apart from each other by a preset distance along the circumference of the outer peripheral surface.

In some embodiments, a non-pressing region in which the first substrate tab and the second substrate tab may be not pressed is formed between the plurality of second pressing portions while pressing the electrode plate, the first substrate tab, and the second substrate tab between the anvil and the welding horn.

In some embodiments, the first pressing portion may be continuously formed along a circumference of an outer peripheral surface of the disk-shaped welding head while pressing the electrode plate, the first substrate tab, and the second substrate tab between the anvil and the welding horn, the first pressing portion having a predetermined first width, and the second pressing portion may include a circumferential pressing portion formed continuously along the circumference of the outer peripheral surface while pressing the electrode plate, the first substrate tab, and the second substrate tab between the anvil and the welding horn, the first pressing portion having a predetermined second width at a predetermined interval from the first pressing portion in a direction orthogonal to the circumferential direction of the outer peripheral surface, and a plurality of intermediate pressing portions formed along the circumference of the outer peripheral surface, the plurality of intermediate pressing portions having a predetermined third width between the first pressing portion and the circumferential pressing portion, each of the plurality of intermediate pressing portions being formed with a predetermined length in the circumferential direction of the outer peripheral surface, and each of the plurality of intermediate pressing portions being disposed at a preset constant interval in the circumferential direction of the outer peripheral surface.

In some embodiments, a fourth region corresponding to the preset constant interval may include a non-pressing region in which the first substrate tab and the second substrate tab are not pressed while pressing the electrode plate, the first substrate tab, and the second substrate tab between the anvil and the welding horn.

In some embodiments, the first pressing portion may include a plurality of first pressing portion protrusions protruding from an outer peripheral surface of the disk-shaped welding head at predetermined intervals, and the second pressing portion comprises a plurality of second pressing portion protrusions protruding from the outer peripheral surface of the disk-shaped welding head at predetermined intervals.

In some embodiments, a second length of a protrusion protruding from the plurality of second pressing portion protrusions may be greater than a first length of a protrusion protruding from the plurality of first pressing protrusions.

In some embodiments, the second pressing portion may include at least one segment of the second pressing portion, and a number of the at least one segment of the second pressing portion may be preset based on at least one of a circumferential length of the disk-shaped welding head or a length of the electrode plate.

In some embodiments, an electrode assembly may include a first electrode, a second electrode, and a separator disposed between the first electrode and the second electrode, wherein at least one of the first electrode or the second electrode may include an electrode substrate may include an insulation layer, a first metal layer disposed on a first surface of the insulation layer, the first metal layer including a first metal layer non-coated portion on which no active material is applied, and a second metal layer disposed on a second surface of the insulation layer, the second metal layer including a second metal layer non-coated portion on which no active material is applied, the electrode substrate having a first electrode mixture layer formed on a first metal layer part of the first metal layer on which the active material is applied, and the electrode substrate having a second electrode mixture layer formed on a second metal layer part of the second metal layer on which the active material is applied, a first substrate tab formed by extending in a first direction from a first point on the first metal layer non-coated portion, and a second substrate tab formed by extending in the first direction from a second point on the second metal layer non-coated portion, the second substrate tab being formed to face the first substrate tab, wherein only a part of a region between the first substrate tab and the second substrate tab is welded.

In some embodiments, a first region of the first substrate tab may be connected to the first metal layer non-coated portion, a first region of the second substrate tab may be connected to the second metal layer non-coated portion, and a second region of the first substrate tab and a second region of the second substrate tab may be connected to each other, such that the first metal layer and the second metal layer are electrically connected.

In some embodiments, the first point may be located on the first metal layer non-coated portion, the first point separated from the first electrode mixture layer of the first metal layer by a predetermined distance, and the second point may be located on the second metal layer non-coated portion, the second point separated from the second electrode mixture layer by the predetermined distance.

In some embodiments, at least one of the first electrode or the second electrode may further include a first weld portion including welding in: (1) a first region between the first metal layer non-coated portion and the first substrate tab, and (2) in a second region between the second metal layer non-coated portion and the second substrate tab, and a second weld portion that extends in the first direction from the first weld portion, wherein the second weld portion includes welding in: (3) a third region between the first substrate tab and the second substrate tab, the third region having a predetermined width at one end and an other end of the first substrate tab, wherein the second substrate tab is oriented in a second direction that intersects the first direction.

In some embodiments, the first weld portion may be continuously welded in: a fourth region adjacent to the first region between the first metal layer non-coated portion and the first substrate tab, and in a fifth region adjacent to the second region between the second metal layer non-coated portion and the second substrate tab.

In some embodiments, a non-weld region between the first substrate tab and the second substrate tab may be not welded is formed at a preset interval, the non-weld region located between the second weld portion at one end of the electrode substrate in the second direction and the second weld portion welded at another end of the electrode substrate in the second direction.

In some embodiments, the first substrate tab may include a plurality of first substrate tabs, the second substrate tab may include a plurality of second substrate tabs, the plurality of first substrate tabs and the plurality of second substrate tabs may be stacked in a crossing direction, a lead tab may be disposed on the non-weld region among the plurality of first substrate tabs and the plurality of second substrate tabs stacked in the crossing direction, and the non-weld region and the lead tab may be welded to each other.

In some embodiments, a space in the second direction between the second weld portion welded at the one end of the electrode substrate and the second weld portion welded at the other end of the electrode substrate may be set based on a width of the lead tab in the second direction.

In some embodiments, at least one of the first electrode or the second electrode may further include a third weld portion that connects, in the second direction, a plurality of second weld portions that are welded at the one end of the first substrate tab, the other end of the first substrate tab, the one end of the second substrate tab, and the other end of the second substrate tab, respectively.

In some embodiments, at least one of the first electrode or the second electrode may further include a coating portion in which an insulation material is coated on the first substrate tab and the second substrate tab in the first weld portion.

According to some embodiments of the present disclosure, a welding device capable of securing a sufficient welding area between metal layers disposed on both surfaces (e.g., a first surface and a second surface) of an insulation layer included in an electrode substrate and substrate tabs can be provided.

According to some embodiments of the present disclosure, a welding strength can be improved by widening a welding area between substrate tabs while securing an area of the substrate tabs that is in contact with a lead tab.

According to some embodiments of the present disclosure, an electrode having high energy density can be manufactured by securing welding areas of the substrate tabs and the lead tab, thereby reducing lengths of the substrate tabs extending from the electrode substrate and reducing lengths of the lead tabs connected to the substrate tabs.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an example of an upper surface of an electrode plate according to an embodiment of the present disclosure.
FIG. 2 is a cross-sectional view illustrating an example of the A-A region of FIG. 1.
FIG. 3 illustrates an example of an upper surface of the electrode plate according to an embodiment of the present disclosure in which substrate tabs are disposed.
FIG. 4 is a cross-sectional view illustrating an example of the B-B region of FIG. 3.
FIG. 5 illustrates an example of a welding device and an electrode plate according to an embodiment of the present disclosure.
FIG. 6 illustrates an example of an unfolded view of a welding head of the welding device according to an embodiment of the present disclosure.
FIG. 7 is a cross-sectional view illustrating an example of the C-C region of FIG. 6.
FIGS. 8 and 9 illustrate exemplary states before and after welding of the electrode plate and substrate tabs performed by the welding device according to an embodiment of the present disclosure.
FIG. 10 is a cross-sectional view illustrating an example of the D-D region of FIG. 9.
FIG. 11 is a cross-sectional view illustrating an example of the E-E region of FIG. 9.
FIG. 12 illustrates an example of a single electrode manufactured by slitting and notching the electrode plate shown in FIG. 9.
FIG. 13 illustrates another example of the welding device according to an embodiment of the present disclosure.
FIG. 14 illustrates an unfolded view of a welding head of another example of the welding device according to an embodiment of the present disclosure.
FIG. 15 is a cross-sectional view illustrating an example of the F-F region of FIG. 13.
FIGS. 16 and 17 illustrate states before and after welding of the electrode plate and substrate tabs performed by another example of the welding device according to an embodiment of the present disclosure.
FIG. 18 illustrates an example of a single electrode manufactured by slitting and notching the electrode plate shown in FIG. 17.
FIG. 19 illustrates an example of a coating portion coated in a first weld portion according to an embodiment of the present disclosure.
FIG. 20 is a cross-sectional view illustrating an example of the G-G region of FIG. 19.
FIG. 21 illustrates an example of a single electrode manufactured by slitting and notching the electrode plate shown in FIG. 19.
FIG. 22 illustrates an example of a stacked structure in which a first electrode, a separator, and a second electrode are laminated according to an embodiment of the present disclosure.
FIG. 23 illustrates an example of an electrode assembly in which a lead tab is connected to substrate tabs according to an embodiment of the present disclosure.
FIG. 24 is a cross-sectional view illustrating an example of the H-H region of FIG. 23.
FIG. 25 is a cross-sectional view illustrating an example of the I-I region of FIG. 23.
FIG. 26 illustrates an example of a secondary battery housing the electrode assembly according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components."

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

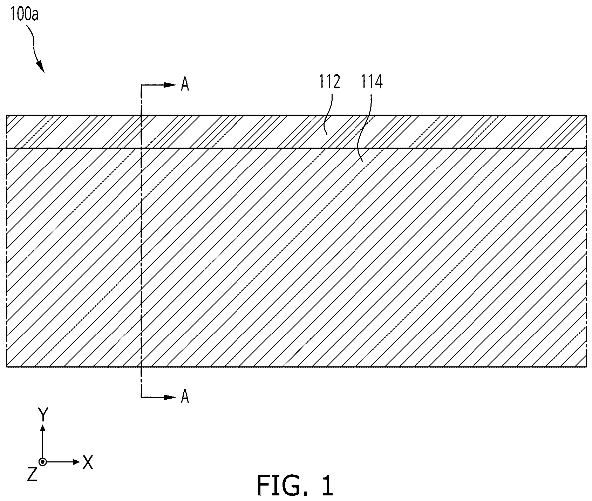

Hereinafter, with reference to FIGS. 1 to 26, various embodiments of the present disclosure will be described. Throughout the entire specification, identical reference numerals may designate identical constituent elements.

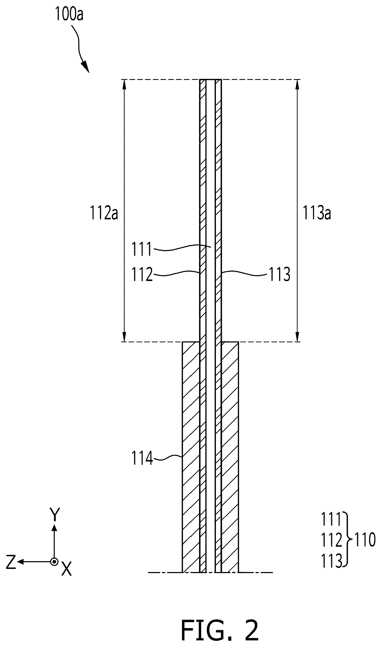

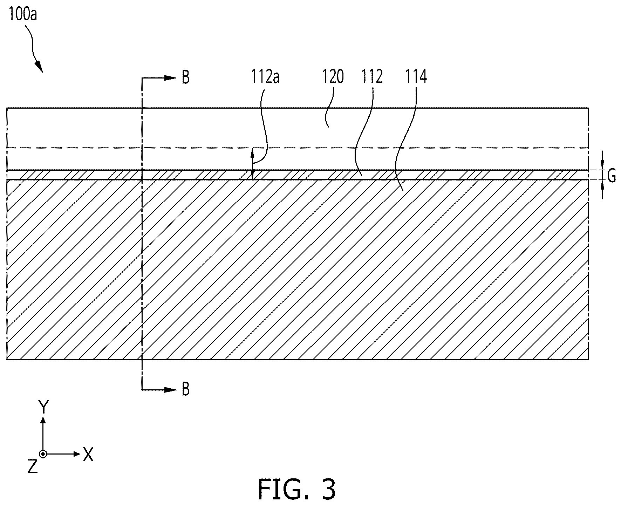

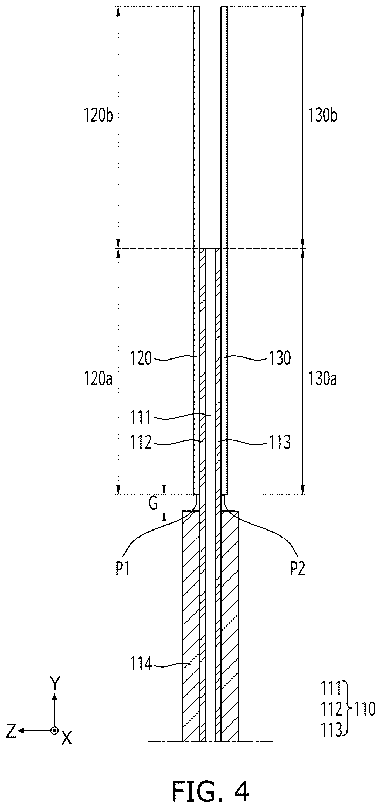

FIG. 1 illustrates an example of an upper surface of an electrode plate according to an embodiment of the present disclosure. FIG. 2 is a cross-sectional view illustrating an example of the A-A region of FIG. 1. FIG. 3 illustrates an example of an upper surface of the electrode plate according to an embodiment of the present disclosure in which substrate tabs are disposed. FIG. 4 is a cross-sectional view illustrating an example of the B-B region of FIG. 3.

With reference to FIGS. 1 and 2, an electrode plate 100a according to an embodiment of the present disclosure may include an electrode substrate 110 and mixture portions 114. The electrode substrate 110 may include an insulation layer 111, a first metal layer 112 and a second metal layer 113 that are respectfully disposed on both surfaces of the insulation layer 111 (i.e., the first metal layer 112 disposed on a first surface of the insulation layer 111, the second metal layer 113 disposed on a second surface of the insulation layer 111). Each of the electrode mixture layers 114 may be formed by applying an active material on a region of each of the first metal layer 112 and the second metal layer 113.

According to an embodiment, the insulation layer 111 may be formed of a polymer material. For example, the insulation layer 111 may be formed of polyethylene terephthalate (PET) resin. The material of the insulation layer 111 is not limited thereto and may be formed of a polyester resin such as polytrimethylene terephthalate (PTT), polybutylene terephthalate (PBT), or polyethylene naphthalate (PEN).

According to an embodiment, the first metal layer 112 may be disposed on one surface of the insulation layer 111, and the second metal layer 113 may be disposed on the other surface of the insulation layer 111. Each of the first metal layer 112 and the second metal layer 113 may be formed by coating a metal material such as copper, a copper alloy, nickel, or a nickel alloy on the insulation layer 111, or by coating a metal material such as aluminum or an aluminum alloy thereon.

For example, when the first metal layer 112 and the second metal layer 113 are composed of aluminum, the electrode mixture layers 114 formed on regions of the first metal layer 112 and the second metal layer 113 may include a positive-electrode active material. In this case, the electrode plate 100a functions as a positive-electrode plate, and a positive electrode may be manufactured by a slitting process or the like.

As another example, when the first metal layer 112 and the second metal layer 113 are composed of copper, the electrode mixture layers 114 formed on regions of the first metal layer 112 and the second metal layer 113 may include a negative-electrode active material. In this case, the electrode plate 100a functions as a negative-electrode plate, and a negative electrode may be manufactured by a slitting process or the like.

According to an embodiment, the electrode mixture layer 114 may be formed by applying an active material on a region of the first metal layer 112. A non-coated portion 112a of the first metal layer 112 may be a region of the first metal layer 112 on which the active material is not applied.

According to an embodiment, the electrode mixture layer 114 may be formed by applying an active material on a region of the second metal layer 113. A non-coated portion 113a of the second metal layer 113 may be a region of the second metal layer 113 on which the active material is not applied.

As shown in FIGS. 1 and 2, when the electrode substrate 110 includes the insulation layer 111 formed of a polymer material, a weight of the electrode substrate 110 itself can be reduced, such that an energy density of a battery can be improved. However, because the first metal layer 112 and the second metal layer 113 are insulated from each other by the insulation layer 111, an additional configuration and process for electrically connecting the first metal layer 112 and the second metal layer 113 may be required.

With reference to FIGS. 2 to 4, the electrode plate 100a according to an embodiment of the present disclosure may include a first substrate tab 120 and a second substrate tab 130 for connecting the first metal layer 112 and the second metal layer 113.

According to an embodiment, the first substrate tab 120 may be disposed to extend in a first direction (for example, a Y-axis direction) from a first point P1 on the non-coated portion 112a of the first metal layer 112. The first point P1 may be a point on the non-coated portion 112a of the first metal layer 112 that is separated from the electrode mixture layer 114 of the first metal layer 112 by a predetermined distance.

According to an embodiment, the second substrate tab 130 may be disposed to extend in the first direction (for example, the Y-axis direction) from a second point P2 on the non-coated portion 113a of the second metal layer 113. The first substrate tab 120 and the second substrate tab 130 may be disposed facing each other. The second point P2 may be a point on the non-coated portion 113a of the second metal layer 113 that is separated from the electrode mixture layer 114 of the second metal layer 113 by a predetermined distance.

In an example, when the first substrate tab 120 and the electrode mixture layer 114 or the second substrate tab 130 and the electrode mixture layer 114 are in contact with each other or are very close to each other, a short circuit may occur, and a problem may arise. For example, the electrode mixture layer 114 may be damaged when welding the first substrate tab 120 and the second substrate tab 130. In addition, as distances between (1) the first substrate tab 120 and the electrode mixture layer 114, and between (2) the second substrate tab 130 and the electrode mixture layer 114 increase, a width of the electrode mixture layer 114 decreases, so a battery capacity may decrease. Accordingly, the first point P1 and the second point P2 may separate from the electrode mixture layer 114, such that the first substrate tab 120 and the electrode mixture layer 114, and the second substrate tab 130 and the electrode mixture layer 114, do not cause a short circuit and do not damage the electrode mixture layer 114 in the welding process, while also minimizing a decrease in battery capacity.

According to an embodiment, when the first metal layer 112 and the first substrate tab 120, the second metal layer 113 and the second substrate tab 130, and the first substrate tab 120 and the second substrate tab 130 are connected, the first metal layer 112 and the second metal layer 113 can be electrically connected to each other through the first substrate tab 120 and the second substrate tab 130. Specifically, a first region 120a of the first substrate tab 120 may be connected to the non-coated portion 112a of the first metal layer 112, a first region 130a of the second substrate tab 130 may be connected to the non-coated portion 113a of the second metal layer 113, and a second region 120b of the first substrate tab 120 and a second region 130b of the second substrate tab 130 may be connected to each other so that the first metal layer 112 and the second metal layer 113 are electrically connected to each other.

Hereinafter, a method of welding-connecting the electrode plate 100a, the first substrate tab 120, and the second substrate tab 130 by a welding device 1000 according to an embodiment of the present disclosure will be described in detail.

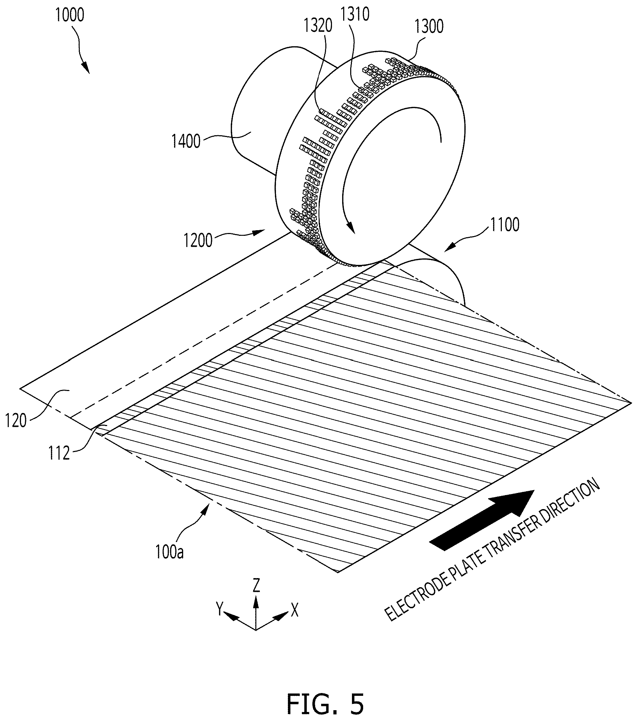

FIG. 5 illustrates an example of a welding device and an electrode plate according to an embodiment of the present disclosure.

With reference to FIG. 5, the welding device 1000 according to an embodiment of the present disclosure may include an anvil 1100 and a welding horn 1200 configured to apply ultrasound to weld the electrode plate 100a, the first substrate tab 120, and the second substrate tab 130 together while pressing the electrode plate 100a, the first substrate tab 120, and the second substrate tab 130 (see FIG. 4) that are disposed on the anvil 1100. The welding horn 1200 may include a disk-shaped welding head 1300 and a body portion 1400 connected to a central axis of the welding head 1300 so that the welding head 1300 is rotatable. The welding head 1300 may include a first pressing portion 1310 configured to press into a first region between the electrode plate 100a and the first substrate tab 120 and a second region between the electrode plate 100a and the second substrate tab 130, and a second pressing portion 1320 configured to press into part of a third region between the first substrate tab 120 and the second substrate tab 130.

According to an embodiment, the electrode plate 100a, the first substrate tab 120, and the second substrate tab 130 may be welding targets and may be conveyed between the anvil 1100 and the welding horn 1200 by an electrode plate transfer device (not shown).

According to an embodiment, the welding targets, that is, the electrode plate 100a, the first substrate tab 120, and the second substrate tab 130, may be conveyed and disposed on one surface of the anvil 1100. As an example, the first substrate tab 120 and the second substrate tab 130 may be conveyed in an overlapping state on the non-coated portion 112a of the first metal layer 112 (see FIG. 2) and the non-coated portion 113a of the second metal layer 113 (see FIG. 2) of the electrode plate 100a and may be disposed on the anvil 1100.

According to an embodiment, the anvil 1100 may be symmetrical to the welding horn 1200. However, the embodiments are not limited thereto, and any shape may be used as the anvil 1100 as long as the electrode plate 100a, the first substrate tab 120, and the second substrate tab 130 can be conveyed and pressed between the anvil 1100 and the welding horn 1200. For example, the anvil 1100 may be configured as a pair of rollers together with the welding horn 1200, and the electrode plate 100a, the first substrate tab 120, and the second substrate tab 130 may be pressed and passed in a rotation direction of the anvil 1100 and the welding horn 1200.

According to an embodiment, the welding horn 1200 may apply ultrasound to weld the electrode plate 100a, the first substrate tab 120, and the second substrate tab 130 disposed on the anvil 1100 while pressing the electrode plate 100a, the first substrate tab 120, and the second substrate tab 130 between the welding horn 1200 and the anvil 1100. The welding horn 1200 may include the welding head 1300 and the body portion 1400.

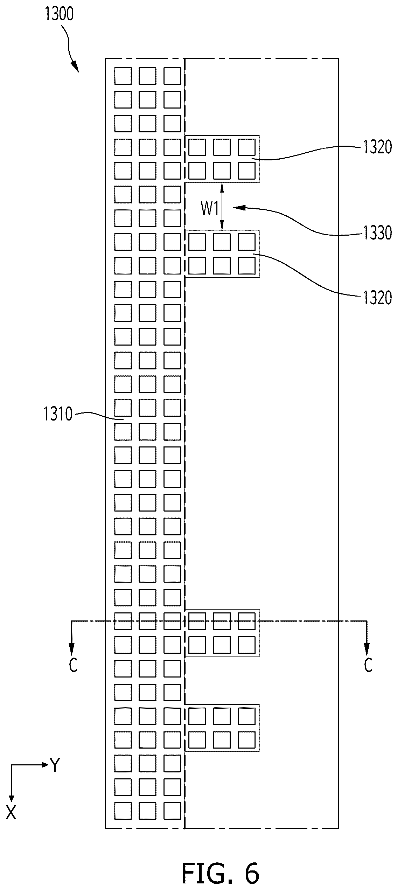

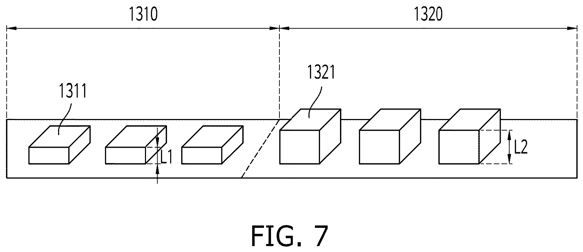

According to an embodiment, the welding head 1300 may be configured in a substantially disk shape and may include the first pressing portion 1310 and the second pressing portion 1320 that are formed along an outer peripheral surface of a circumference of the disk. Specific descriptions of the first pressing portion 1310 and the second pressing portion 1320 will be provided below with reference to FIGS. 6 and 7.

According to an embodiment, the welding head 1300 may rotate in a direction (for example, an X-axis direction) corresponding to an electrode plate transfer direction (for example, a counter-clockwise direction) and may continuously press into the welding targets (for example, the electrode plate 100a, the first substrate tab 120, and the second substrate tab 130) disposed on the anvil 1100 (i.e., the welding targets are pressed between the anvil 1100 and the welding head 1300 as the welding head 1300 rotates).

According to an embodiment, the body portion 1400 may be connected to the central axis of the welding head 1300 so that the welding head 1300 is rotatable. The body portion 1400 may ultrasonically vibrate in a direction perpendicular to the electrode plate transfer direction (for example, an X-axis direction and a Z-axis direction). As the body portion 1400 vibrates, the vibration is transmitted to the welding head 1300 connected to the body portion 1400, so ultrasound can be applied to the welding targets. For example, the electrode plate 100a, the first substrate tab 120, and the second substrate tab 130 are conveyed and disposed on the anvil 1100, and in a state in which the electrode plate 100a, the first substrate tab 120, and the second substrate tab 130 disposed on the anvil 1100 are pressed into by the welding head 1300, the welding head 1300 can be laterally vibrated. Due to vibration energy at this time, contact surfaces of the electrode plate 100a, the first substrate tab 120, and the second substrate tab 130 may be heated and can be welded together.

FIG. 6 illustrates an unfolded view of a welding head of the welding device according to an embodiment of the present disclosure. FIG. 7 is a cross-sectional view illustrating a C-C region of FIG. 6.

With reference to FIG. 6, the welding head 1300 of the welding device 1000 according to an embodiment of the present disclosure may include the first pressing portion 1310 and the second pressing portion 1320.

According to an embodiment, the first pressing portion 1310 may be continuously formed along a circumference of an outer peripheral surface of the welding head 1300 with a predetermined width (e.g., extending in the Y direction). The first pressing portion 1310 may press into the first substrate tab 120 and the second substrate tab 130 corresponding to the first region 120a of the first substrate tab 120 (see FIG. 4) and the first region 130a of the second substrate tab 130 (see FIG. 4). For example, at the first region 120a of the first substrate tab 120, the first pressing portion 1310 can press into the first substrate tab 120 disposed on the non-coated portion 112a of the first metal layer 112 (see FIG. 2). At the first region 120a of the first substrate tab 120, the first substrate tab 120 can be welded to the first metal layer 112. As another example, at the first region 130a of the second substrate tab 130, the first pressing portion 1310 can press into the second substrate tab 130 disposed on the non-coated portion 113a of the second metal layer 113 (see FIG. 2). At the first region 130a of the second substrate tab 130, the second substrate tab 130 can be welded to the second metal layer 113.

According to an embodiment, the second pressing portion 1320 may include a plurality of second pressing portions 1320 that are formed to extend in pairs from the first pressing portion 1310 in a direction (for example, a Y-axis direction) orthogonal to a circumferential direction of the outer peripheral surface of the welding head 1300. The plurality of second pressing portions 1320 may be spaced apart from each other by a preset distance W1 along the circumference of the outer peripheral surface of the welding head 1300.

According to an embodiment, the plurality of second pressing portions 1320 may press into the first substrate tab 120 and the second substrate tab 130 corresponding to the second region 120b of the first substrate tab 120 and the second region 130b of the second substrate tab 130. For example, at the second region 120b of the first substrate tab 120 and the second region 130b of the second substrate tab 130, the second pressing portion 1320 can press into both the first substrate tab 120 and the second substrate tab 130, so the first substrate tab 120 and the second substrate tab 130 can be welded together.

According to an embodiment, a non-pressing region 1330 in which the first substrate tab 120 (see FIG. 4) and the second substrate tab 130 (see FIG. 4) are not pressed may be formed between the plurality of second pressing portions 1320. For example, in a region in which the second region 120b of the first substrate tab 120 and the second region 130b of the second substrate tab 130 face each other, the first substrate tab 120 and the second substrate tab 130 may be partially pressed and welded by the plurality of second pressing portions 1320 in an electrode plate transfer direction (for example, an X-axis direction). A portion of the first substrate tab 120 and the second substrate tab 130 corresponding to the non-pressing region 1330 between the plurality of second pressing portions 1320 may not be pressed and thus may not be welded to each other.

According to an embodiment, each of the first pressing portion 1310 and the second pressing portion 1320 may include a plurality of protrusions 1311 and 1321 that protrude from the outer peripheral surface of the welding head 1300 at predetermined intervals.

According to an embodiment, the plurality of protrusions 1311 and 1321 may be continuously disposed at predetermined intervals along the outer peripheral surface of the welding head 1300. The plurality of protrusions 1311 and 1321 may protrude from the outer peripheral surface of the welding head 1300. Protruding surfaces of the plurality of protrusions 1311 and 1321 may have a certain shape that is in good contact with the welding targets. For example, the plurality of protrusions 1311 and 1321 may have a plurality of rectangular pillar shapes protruding from the outer peripheral surface of the welding head 1300. Other shapes are likewise within the scope of this disclosure.

According to an embodiment, heights by which the plurality of protrusions 1311 included in the first pressing portion 1310 and the plurality of protrusions 1321 included in the second pressing portion 1320 protrude from the outer peripheral surface of the welding head 1300 may be different from each other. For example, a length L2 of a protrusion 1321 protruding from the outer peripheral surface of the welding head 1300 at the second pressing portion 1320 may be greater than a length L1 of a protrusion protruding from the outer peripheral surface of the welding head 1300 at the first pressing portion 1310. This correspondence can be based on a thickness of the electrode substrate 110, where the first pressing portion 1310 presses a first region in which the electrode substrate 110 (see FIG. 4), the first substrate tab 120, and the second substrate tab 130 are overlapped, and the second pressing portion 1320 presses a second region in which the first substrate tab 120 and the second substrate tab 130 are overlapped.

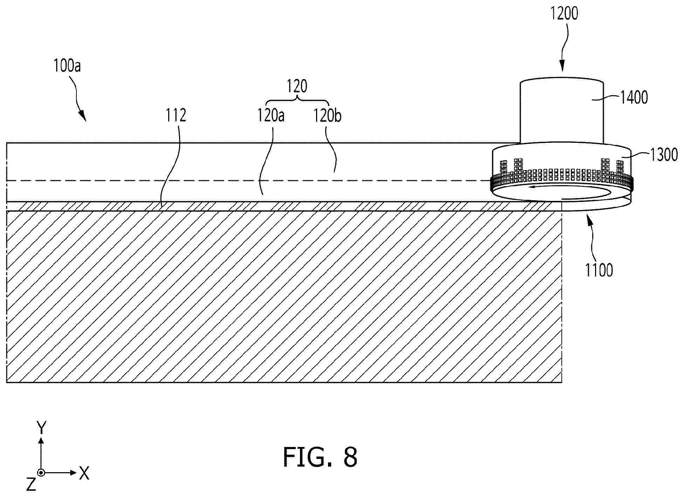

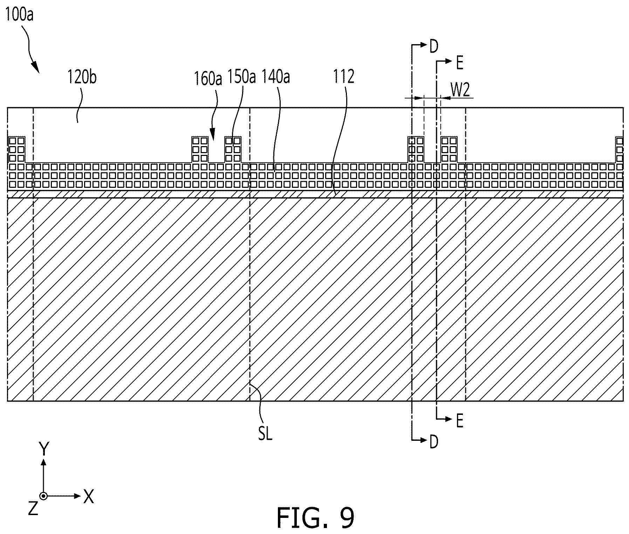

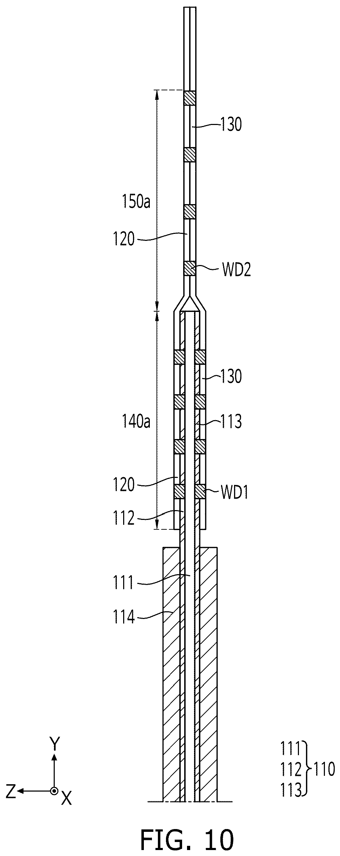

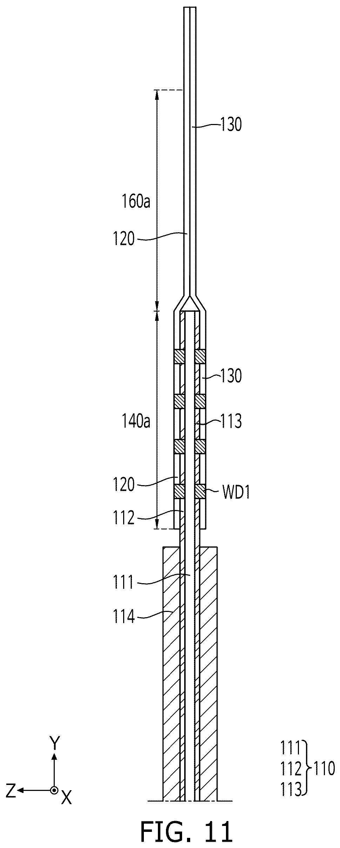

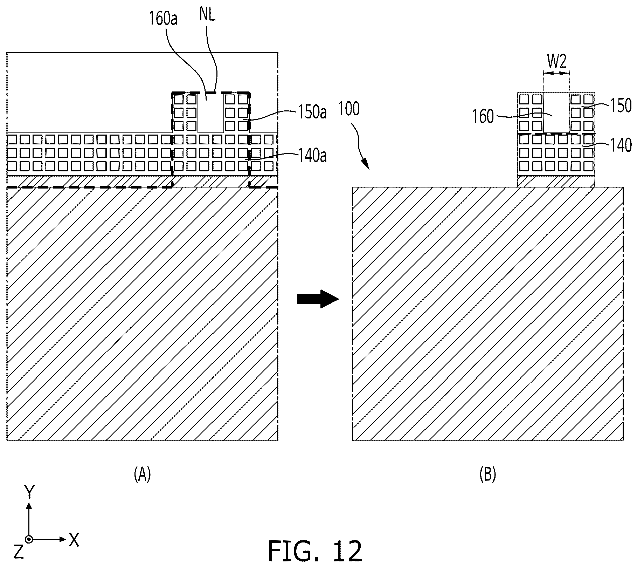

FIGS. 8 and 9 illustrate exemplary states before and after welding of the electrode plate and substrate tabs performed by the welding device according to an embodiment of the present disclosure. FIG. 10 is a cross-sectional view illustrating an example of the D-D region of FIG. 9. FIG. 11 is a cross-sectional view illustrating an example of the E-E region of FIG. 9. FIG. 12 illustrates an example of a single electrode manufactured by slitting and notching processes of the electrode plate shown in FIG. 9.

With reference to FIGS. 3, 4, and 8, an electrode plate 100a according to an embodiment of the present disclosure, in which the first substrate tab 120 is disposed on the non-coated portion 112a of the first metal layer 112 (see FIG. 2) of the electrode substrate 110, and the second substrate tab 130 is disposed on the non-coated portion 113a of the second metal layer 113 (see FIG. 2), can be conveyed in one direction (for example, the Y-axis direction) between the anvil 1100 and the welding horn 1200.

According to an embodiment, the anvil 1100 and the welding horn 1200 may rotate in correspondence with an electrode plate transfer direction (for example, an X-axis direction), and the electrode plate 100a may be pressed between the anvil 1100 and the welding horn 1200 while the welding horn 1200 rotates. For example, in correspondence with a speed at which the electrode plate 100a is conveyed, the body portion 1400 of the welding horn 1200 can provide driving force so that the welding head 1300 is rotatable. The body portion 1400 can ultrasonically vibrate in a direction perpendicular to the electrode plate transfer direction (for example, a Z-axis direction). As the body portion 1400 vibrates, vibration is transmitted to the welding head 1300 connected to the body portion 1400, so ultrasound can be applied to the electrode plate 100a.

According to an embodiment, as the welding head 1300 rotates, the first pressing portion 1310 (see FIG. 6) of the welding head 1300 can press into the first region 120a of the first substrate tab 120. The plurality of second pressing portions 1320 (see FIG. 6) formed in pairs on the welding head 1300 can press into a part of the second region 120b of the first substrate tab 120, but the non-pressing region 1330 (see FIG. 6) may not press into another part of the second region 120b of the first substrate tab 120.

According to an embodiment, the second pressing portion 1320 may comprise one or more second pressing portions 1320. A number of the one or more second pressing portions 1320 may be preset based on at least one of a circumferential length of the welding head 1300 (assuming the welding head 1300 is disk-shaped) or a length of the electrode plate 100a. The circumferential length of the disk-shaped welding head 1300 can correspond to a width (a length in the X-axis direction) of an electrode 100 (see FIG. 10) slit from the electrode plate 100a according to battery design conditions. For example, when the circumferential length of the disk-shaped welding head 1300 is four times the width of the electrode 100 (see FIG. 12), when the disk-shaped welding head 1300 rotates once, a length in contact with the electrode plate 100a corresponds to a length four times the width of the electrode 100. The second pressing portion 1320 corresponds to the width of each electrode 100 to be slit, and the disk-shaped welding head 1300 may include four second pressing portions 1320 disposed at regular intervals. Accordingly, when the disk-shaped welding head 1300 rotates once on the electrode plate 100a, the second pressing portion 1320 can press the second region 120b of the first substrate tab 120 at regular intervals four times.

With reference to FIGS. 9 to 11, the first region 120a (see FIG. 4) of the first substrate tab 120 according to an embodiment of the present disclosure can be welded to the non-coated portion 112a of the first metal layer 112 (see FIG. 2). The first region 130a (see FIG. 4) of the second substrate tab 130 can be welded to the non-coated portion 113a of the second metal layer 113 (see FIG. 2). A part of a region in which the second region 120b (see FIG. 4) of the first substrate tab 120 and the second region 130b (see FIG. 4) of the second substrate tab 130 face each other may be welded, and the remaining region may not be welded.

According to an embodiment, a first weld region 140a may be a region welded between the non-coated portion 112a (see FIG. 2) of the first metal layer 112 and the first substrate tab 120, and also between the non-coated portion 113a (see FIG. 2) of the second metal layer 113 and the second substrate tab 130. The first weld region 140a may be a region continuously welded in a first direction (for example, an X-axis direction) by the first pressing portion 1310 (see FIG. 6) of the welding head 1300 (see FIG. 8). A first weld depth WD1 can be formed in the first weld region 140a in correspondence with the plurality of protrusions 1311 (see FIG. 7) of the first pressing portion 1310.

According to an embodiment, a second weld region 150a may be a part of the region that is welded among a region in which the second region 120b of the first substrate tab 120 and the second region 130b of the second substrate tab 130 face each other. A non-weld region 160a may be a remaining region that is not welded among the region in which the second region 120b of the first substrate tab 120 and the second region 130b of the second substrate tab 130 face each other. The second weld region 150a may be a region welded by the plurality of second pressing portions 1320 (see FIG. 6) formed in pairs on the welding head 1300 (see FIG. 8). A second weld depth WD2 can be formed in the second weld region 150a in correspondence with the plurality of protrusions 1321 (see FIG. 7) of the second pressing portion 1320. The non-weld region 160a may be a region in which the first substrate tab 120 and the second substrate tab 130 are not welded in a first direction (for example, an X-axis direction) between the pair of second weld regions 150a.

According to an embodiment, the first metal layer 112 and the second metal layer 113 can be indirectly connected to each other through the first substrate tab 120 and the second substrate tab 130 and can thereby be electrically connected to each other. The first region 120a of the first substrate tab 120 is connected to the non-coated portion 112a of the first metal layer 112, the first region 130a of the second substrate tab 130 is connected to the non-coated portion 113a of the second metal layer 113, and a part of the second region 120b of the first substrate tab 120 and the second region 130b of the second substrate tab 130 is connected, such that the first metal layer 112 and the second metal layer 113 can be electrically connected to each other.

With reference to FIGS. 10 and 12, the electrode plate 100a shown in FIG. 9 can be slit along a slitting line (SL) and can be manufactured into a plurality of electrodes. The slit electrode 100 may include the first weld region 140a, the second weld region 150a, and the non-weld region 160a. The slit electrode 100 may have a portion of the electrode substrate 110, the first substrate tab 120, and the second substrate tab 130 punched along a notching line (NL). After being punched, the electrode 100 may include a first weld portion 140, a second weld portion 150, and a non-weld region 160.

According to an embodiment, the first weld portion 140 may be a region welded between the non-coated portion 112a (see FIG. 2) of the first metal layer 112 and the first substrate tab 120, and also between the non-coated portion 113a (see FIG. 2) of the second metal layer 113 and the second substrate tab 130. The second weld portion 150 may be a region welded in a region between the first substrate tab 120 and the second substrate tab 130 with a predetermined width at one end of the first substrate tab 120 and the second substrate tab 130 and the other end of the first substrate tab 120 and the second substrate tab 130 in a second direction (for example, an X-axis direction) that intersects a first direction (for example, a Y-axis direction) while extending from the first weld portion 140 in the first direction.

According to an embodiment, the non-weld region 160 may be a region in which the region between the first substrate tab 120 and the second substrate tab 130 is not welded in a region between the second weld portion 150 welded at one end of the first substrate tab 120 and the second substrate tab 130 in the second direction (for example, the X-axis direction) and the second weld portion 150 welded at the other end of the first substrate tab 120 and the second substrate tab 130 in the second direction.

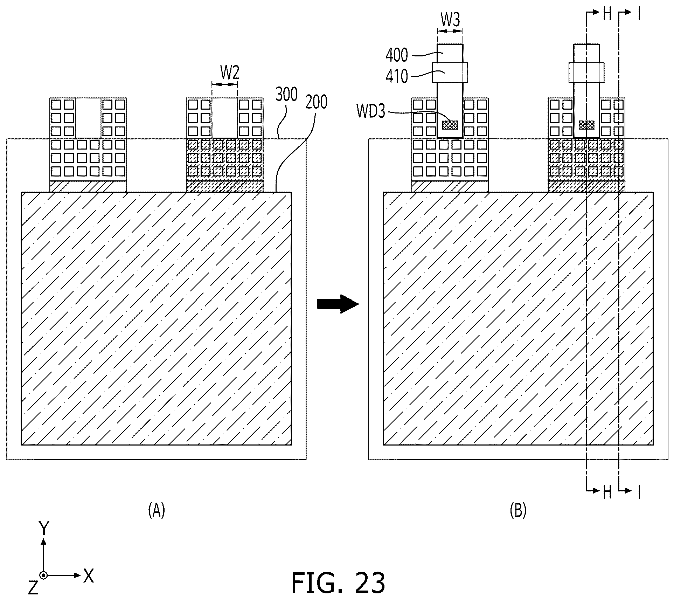

According to an embodiment, the first weld portion 140, the second weld portion 150, and the non-weld region 160 can serve as electrode tabs. The non-weld region 160 may be a region in which a lead tab 400 (see FIG. 23) can be welded, as will be described below.

Even though a width in which the first substrate tab 120 and the second substrate tab 130 are welded in the first direction in the first weld portion 140 is narrow, a welding area of the first substrate tab 120 and the second substrate tab 130 in the second weld portion 150 can be sufficiently secured. Thus, the first substrate tab 120 and the second substrate tab 130 can be welded together with high welding strength.

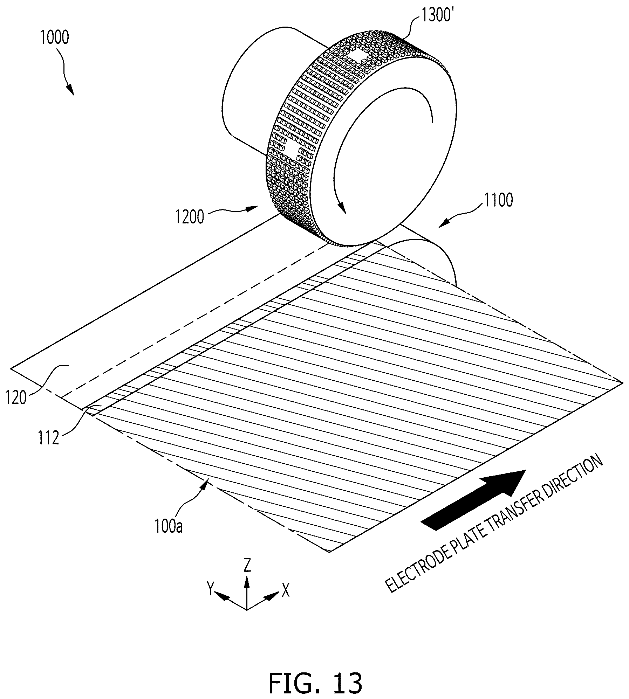

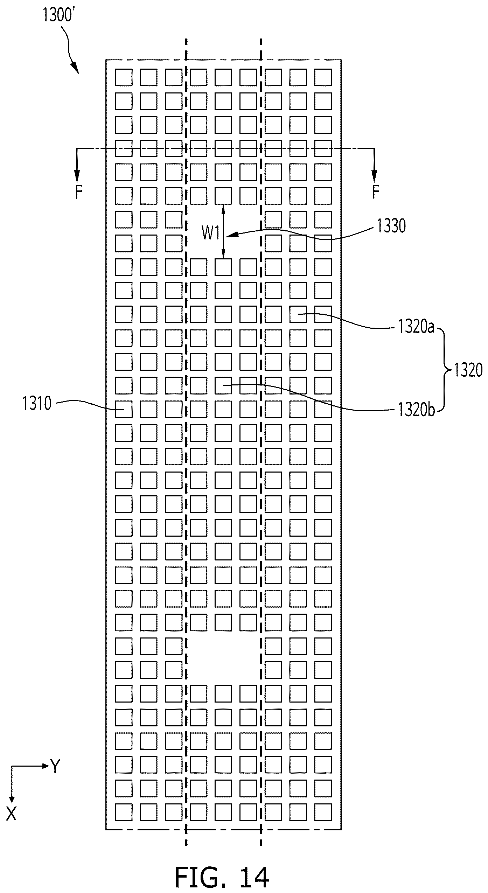

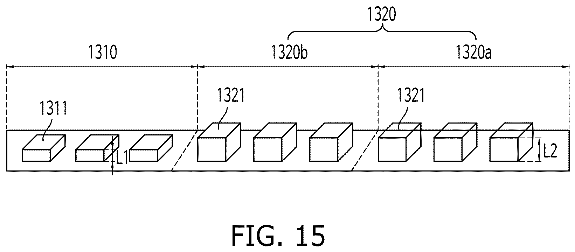

FIG. 13 illustrates another example of the welding device according to an embodiment of the present disclosure. FIG. 14 illustrates an unfolded view of a welding head of another example of the welding device according to an embodiment of the present disclosure. FIG. 15 is a cross-sectional view illustrating an example of the F-F region of FIG. 13.

With reference to FIGS. 13 to 15, the welding device 1000 according to an embodiment of the present disclosure may include a disk-shaped welding head 1300' including pressing portions that surround the non-pressing region 1330. The disk-shaped welding head 1300' may include the first pressing portion 1310 and the second pressing portion 1320.

According to an embodiment, the first pressing portion 1310 may be continuously formed along a circumference of an outer peripheral surface of the disk-shaped welding head 1300' with a predetermined first width. The first pressing portion 1310 may press into the first substrate tab 120 and the second substrate tab 130 corresponding to the first region 120a of the first substrate tab 120 (see FIG. 4) and the first region 130a of the second substrate tab 130 (see FIG. 4). For example, at the first region 120a of the first substrate tab 120, the first pressing portion 1310 can press into the first substrate tab 120 disposed on the non-coated portion 112a of the first metal layer 112 (see FIG. 2). At the first region 120a of the first substrate tab 120, the first substrate tab 120 can be welded to the first metal layer 112. As another example, at the first region 130a of the second substrate tab 130, the first pressing portion 1310 can press into the second substrate tab 130 disposed on the non-coated portion 113a of the second metal layer 113 (see FIG. 2). At the first region 130a of the second substrate tab 130, the second substrate tab 130 can be welded to the second metal layer 113.

According to an embodiment, the second pressing portion 1320 may press into a region other than the non-pressing region 1330 at the second region 120b of the first substrate tab 120 (see FIG. 4) and the second region 130b of the second substrate tab 130 (see FIG. 4). The second pressing portion 1320 may include a circumferential pressing portion 1320a and a plurality of intermediate pressing portions 1320b.

According to an embodiment, the circumferential pressing portion 1320a may be continuously formed along a circumference of an outer peripheral surface of the disk-shaped welding head 1300' with a predetermined second width at a predetermined interval from the first pressing portion 1310 in a direction (for example, a Y-axis direction) orthogonal to a circumferential direction of the outer peripheral surface of the disk-shaped welding head 1300'.

According to an embodiment, the plurality of intermediate pressing portions 1320b may be formed along a circumference of the outer peripheral surface of the disk-shaped welding head 1300' with a predetermined third width between the first pressing portion 1310 and the circumferential pressing portion 1320a. Each of the plurality of intermediate pressing portions 1320b may be formed with a predetermined length in a circumferential direction of the outer peripheral surface of the disk-shaped welding head 1300'. Each of the plurality of intermediate pressing portions 1320b may be formed to be spaced apart at a preset constant interval W1 in the circumferential direction of the outer peripheral surface of the disk-shaped welding head 1300'.

According to an embodiment, a region spaced apart between the plurality of intermediate pressing portions 1320b on the outer peripheral surface of the disk-shaped welding head 1300' may include the non-pressing region 1330 in which the first substrate tab 120 and the second substrate tab 130 are not pressed.

For example, in the region in which the second region 120b of the first substrate tab 120 and the second region 130b of the second substrate tab 130 face each other, the first substrate tab 120 and the second substrate tab 130 may be partially pressed into and welded by the circumferential pressing portion 1320a and the plurality of intermediate pressing portions 1320b in an electrode plate transfer direction (for example, an X-axis direction). A part of the first substrate tab 120 and the second substrate tab 130 corresponding to the non-pressing region 1330 between the plurality of intermediate pressing portions 1320b, the non-pressing region 1330 may not be pressed and may not be welded to each other.

According to an embodiment, each of the first pressing portion 1310 and the second pressing portion 1320 may include a plurality of protrusions 1311 and 1321 that protrude from the outer peripheral surface of the disk-shaped welding head 1300' at predetermined intervals. Since the plurality of protrusions 1311 and 1321 are substantially the same as the plurality of protrusions 1311 and 1321 described with reference to FIGS. 6 and 7, detailed descriptions thereof will be omitted below.

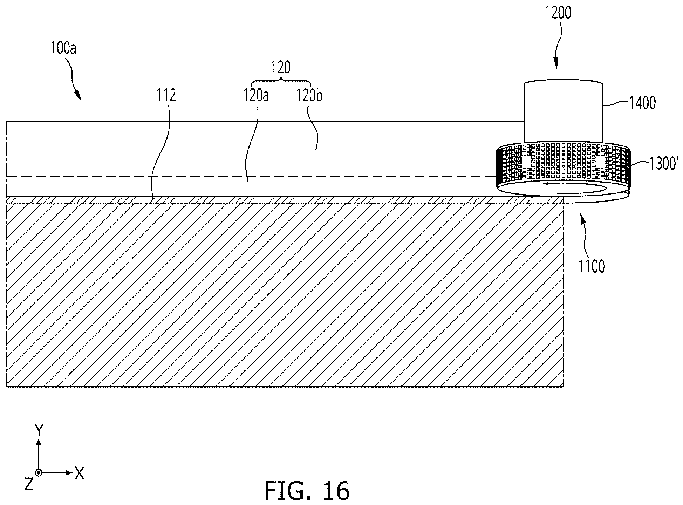

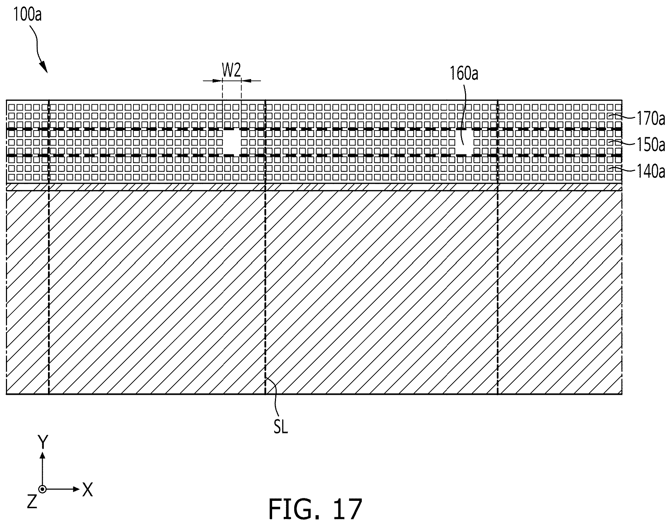

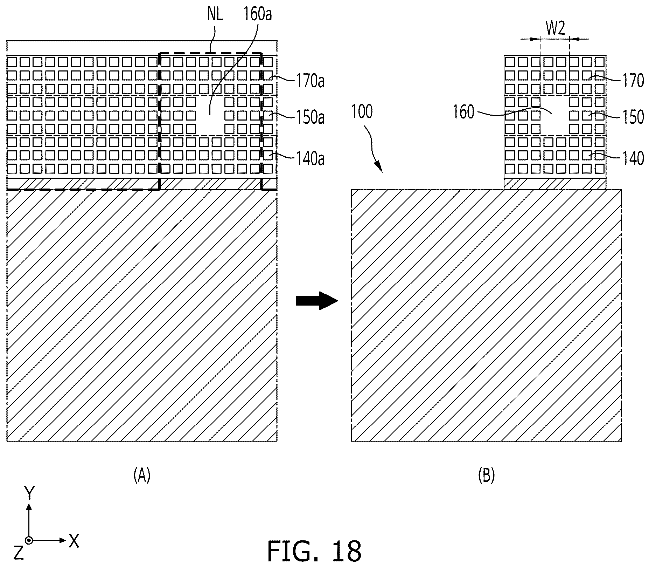

FIGS. 16 and 17 illustrate states before and after welding of the electrode plate and substrate tabs performed by another example of the welding device according to an embodiment of the present disclosure. FIG. 18 illustrates a single electrode manufactured by slitting and notching the electrode plate shown in FIG. 17.

With reference to FIGS. 3, 4, and 16, the electrode plate 100a according to an embodiment, in which the first substrate tab 120 is disposed on the non-coated portion 112a of the first metal layer 112 (see FIG. 2) of the electrode substrate 110 and the second substrate tab 130 is disposed on the non-coated portion 113a of the second metal layer 113 (see FIG. 2), can be conveyed in one direction between the anvil 1100 and the welding horn 1200. The welding horn 1200 may include the disk-shaped welding head 1300' that presses into the electrode plate 100a, the first substrate tab 120, and the second substrate tab 130 and the body portion 1400 that provides rotational power to the disk-shaped welding head 1300'. Except for the disk-shaped welding head 1300' shown in FIG. 16, the remaining configuration is substantially the same as the configuration except for the disk-shaped welding head 1300 described with reference to FIG. 8, and thus the description will be given below focusing on the disk-shaped welding head 1300'.

According to an embodiment, the disk-shaped welding head 1300' may include the first pressing portion 1310 (see FIG. 14), the circumferential pressing portion 1320a (see FIG. 14), the intermediate pressing portion 1320b (see FIG. 14), and the non-pressing region 1330 (see FIG. 14). As described with reference to FIGS. 13 to 15, the first pressing portion 1310 can press into the first region 120a of the first substrate tab 120. The circumferential pressing portion 1320a and the intermediate pressing portion 1320b can press into a part of the second region 120b of the first substrate tab 120, but the non-pressing region 1330 may not press into another part of the second region 120b of the first substrate tab 120.

With reference to FIGS. 3, 4, and 17, the first region 120a of the first substrate tab 120 according to an embodiment can be welded to the non-coated portion 112a of the first metal layer 112 (see FIG. 2). The first region 130a of the second substrate tab 130 can be welded to the non-coated portion 113a of the second metal layer 113 (see FIG. 2). A part of a region in which the second region 120b of the first substrate tab 120 and the second region 130b of the second substrate tab 130 face each other may be welded, and the remaining region may not be welded.

According to an embodiment, a first weld region 140a may be a region welded between the non-coated portion 112a of the first metal layer 112 and the first substrate tab 120 and between the non-coated portion 113a of the second metal layer 113 and the second substrate tab 130. The first weld region 140a may be a region continuously welded in a first direction (for example, an X-axis direction) by the first pressing portion 1310 of the welding head 1300. A first weld depth (not shown) can be formed in the first weld region 140a in correspondence with the height (L1, L2) of the plurality of protrusions 1311 (see FIG. 15) of the first pressing portion 1310.

According to an embodiment, a second weld region 150a may be a part of the region that is welded among the region in which the second region 120b of the first substrate tab 120 and the second region 130b of the second substrate tab 130 face each other. A non-weld region 160a may be a remaining region that is not welded among the region in which the second region 120b of the first substrate tab 120 and the second region 130b of the second substrate tab 130 face each other. The second weld region 150a may be a region welded by the intermediate pressing portion 1320b of the welding head 1300. A second weld depth (not shown) can be formed in the second weld region 150a in correspondence with the plurality of protrusions 1321 (see FIG. 15) of the intermediate pressing portion 1320b. The non-weld region 160a may be a region in which the first substrate tab 120 and the second substrate tab 130 are not welded in a first direction (for example, an X-axis direction) between the second weld regions 150a.

According to an embodiment, a third weld region 170a may be a region welded among the region in which the second region 120b of the first substrate tab 120 and the second region 130b of the second substrate tab 130 face each other. The third weld region 170a may be a region welded by the circumferential pressing portion 1320a of the welding head 1300 (when the welding head 1300 is disk-shaped). The third weld region 170a may be a region continuously welded in the first direction (for example, the X-axis direction) by the circumferential pressing portion 1320a of the welding head 1300.

With reference to FIG. 18, the electrode plate 100a shown in FIG. 17 can be slit along the slitting line (SL) and can be manufactured into a plurality of electrodes. The slit electrode 100 can have a portion of the electrode substrate 110 (see FIG. 10), the first substrate tab 120 (see FIG. 10), and the second substrate tab 130 (see FIG. 10) punched along the notching line (NL). After being punched, the electrode 100 can include a first weld portion 140, a second weld portion 150, a third weld portion 170, and a non-weld region 160.

According to an embodiment, the first weld portion 140 may be a region welded between the non-coated portion 112a of the first metal layer 112 and the first substrate tab 120, and also between the non-coated portion 113a of the second metal layer 113 and the second substrate tab 130. The second weld portion 150 may be a region welded in a region between the first substrate tab 120 and the second substrate tab 130 with a predetermined width at one end and the other end thereof in a second direction (for example, an X-axis direction) that intersects the first direction (for example, a Y-axis direction) while extending from the first weld portion 140 in the first direction. The third weld portion 170 may be a region welded while connecting, in the second direction (for example, the X-axis direction), the plurality of second weld portions 150 that are welded at one end and the other end of the first substrate tab 120 and the second substrate tab 130, respectively. The non-weld region 160 may be a region surrounded by the first weld portion 140, the second weld portion 150, and the third weld portion 170, and may be a region in which the region between the first substrate tab 120 and the second substrate tab 130 is not welded.

According to an embodiment, the first weld portion 140, the second weld portion 150, the third weld portion 170, and the non-weld region 160 can function as electrode tabs. The non-weld region 160 may be a region in which a lead tab 400 (see FIG. 23) can be welded, as will be described below.

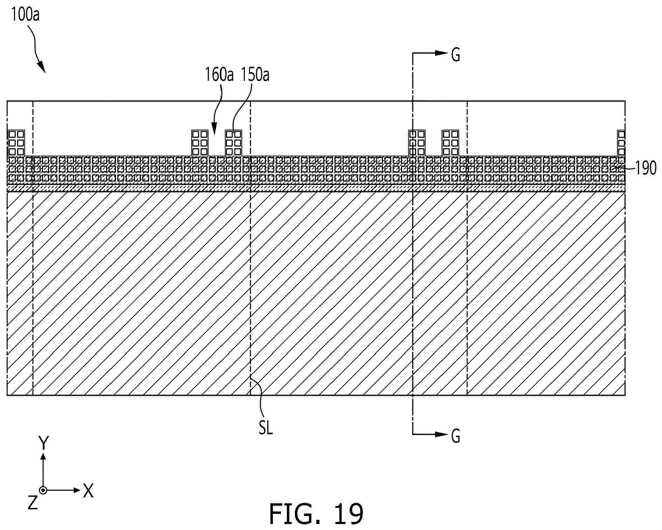

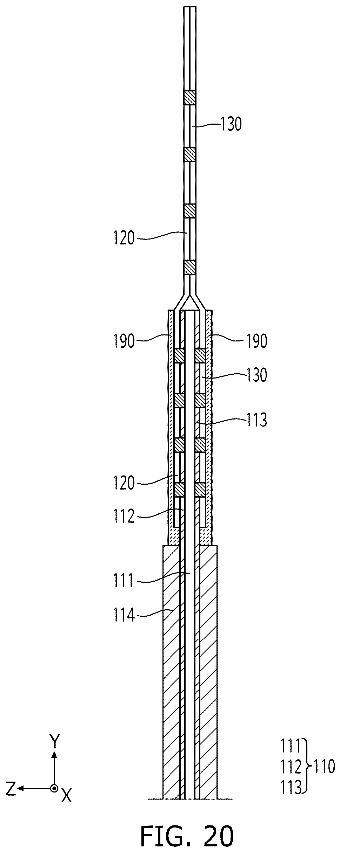

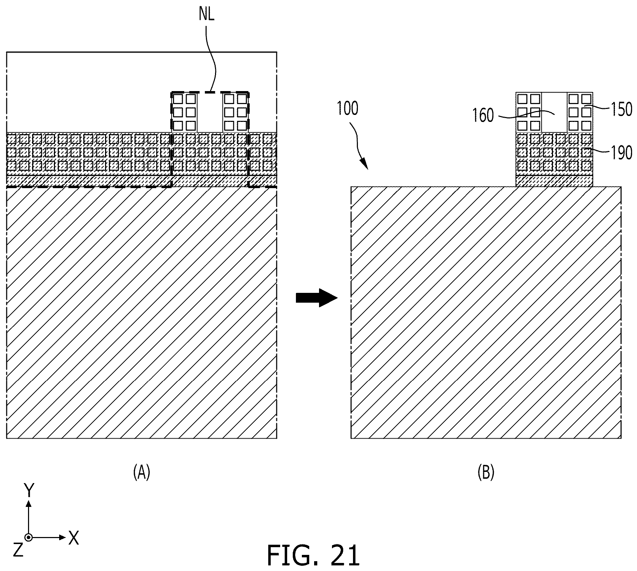

FIG. 19 illustrates an example of a coating portion coated in a first weld portion according to an embodiment of the present disclosure. FIG. 20 is a cross-sectional view illustrating an example of the G-G region of FIG. 19. FIG. 21 illustrates an example of a single electrode manufactured by slitting and notching the electrode plate shown in FIG. 19.

With reference to FIGS. 9, 19, and 20, the electrode plate 100a according to an embodiment of the present disclosure can further include a coating portion 190 in which an insulation material is coated on the first weld region 140a. The coating portion 190 may be formed on the first region 120a of the first substrate tab 120 (see FIG. 4) and the first region 130a of the second substrate tab 130 (see FIG. 4). The coating portion 190 can be formed by filling an insulation material into a region between the first substrate tab 120 and the electrode mixture layer 114 on the non-coated portion 112a of the first metal layer 112 (see FIG. 2) and into a region between the second substrate tab 130 and the electrode mixture layer 114 on the non-coated portion 113a of the second metal layer 113 (see FIG. 2).

With reference to FIGS. 12 and 21, the electrode plate 100a shown in FIG. 20 can be slit along the slitting line SL and can be manufactured into a plurality of electrodes. The slit electrode 100 can have a portion of the electrode substrate 110 (see FIG. 20), the first substrate tab 120 (see FIG. 20), and the second substrate tab 130 (see FIG. 20) punched along the notching line NL. After being punched, the electrode 100 can include the first weld portion 140 (see FIG. 12), the second weld portion 150, the non-weld region 160, and the coating portion 190.

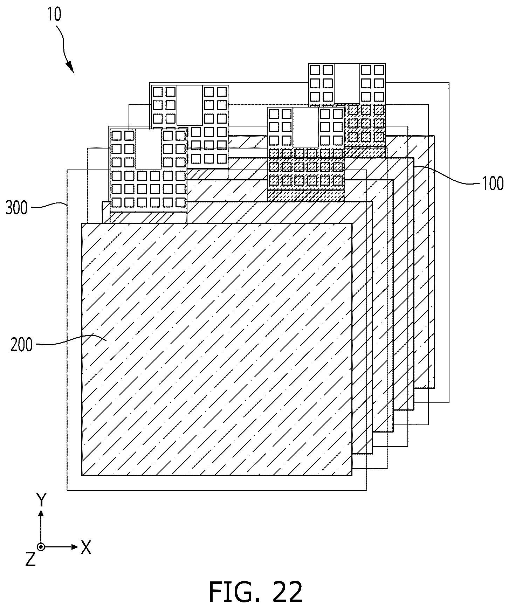

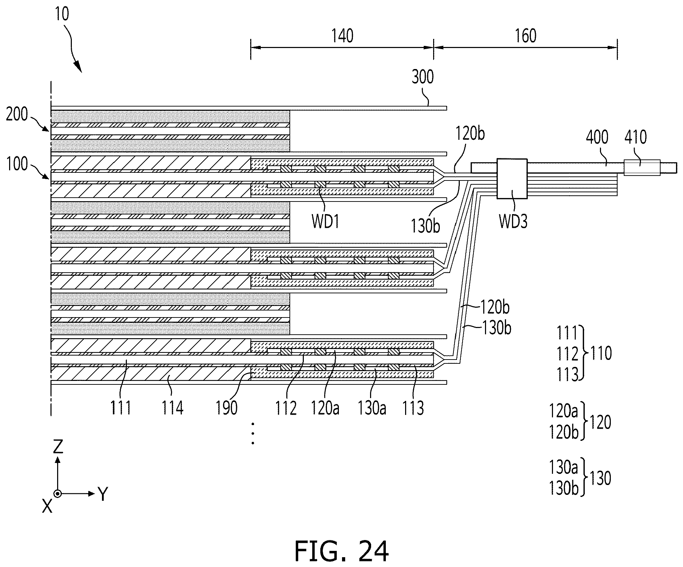

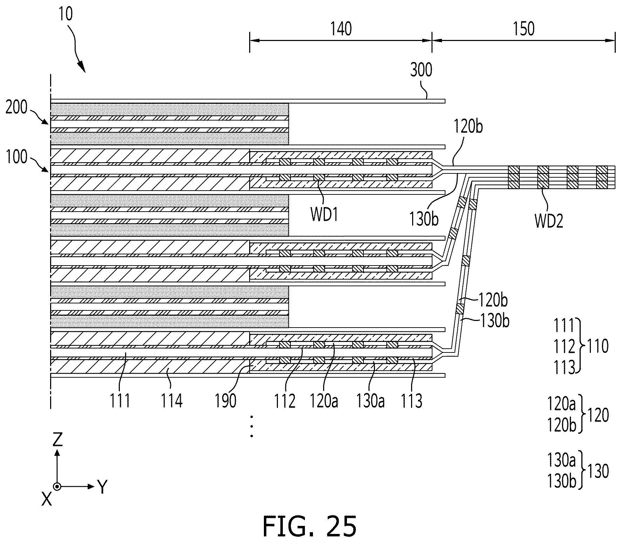

FIG. 22 illustrates an example of a stacked structure in which a first electrode, a separator, and a second electrode are laminated according to an embodiment of the present disclosure. FIG. 23 illustrates an example of an electrode assembly in which a lead tab is connected to substrate tabs according to an embodiment of the present disclosure. FIG. 24 is a cross-sectional view illustrating an example of the H-H region of FIG. 23. FIG. 25 is a cross-sectional view illustrating an example of the I-I region of FIG. 23.

With reference to FIGS. 22 to 25, an electrode assembly 10 according to an embodiment of the present disclosure may include a first electrode 100, a second electrode 200, and a separator 300 disposed between the first electrode 100 and the second electrode 200.

As shown in FIG. 22, according to an embodiment, the electrode assembly 10 may include the first electrode 100, the second electrode 200, and the separator 300, which each are laminated in a predetermined plurality in accordance with a battery design capacity. For example, the electrode assembly 10 may be of a stack type in which the first electrode 100, the second electrode 200, and the separator 300 are disposed between the first electrode 100 and the second electrode 200, which are formed as thin plates or films, are laminated. As another example, the electrode assembly 10 may be of a Z-stack type in which the first electrode 100 and the second electrode 200 are inserted on both sides of a separator 300 folded in a Z-stack formation.

According to an embodiment, the first electrode 100 may be an electrode corresponding to a positive electrode or a negative electrode in a secondary battery. The second electrode 200 may be an electrode corresponding to a polarity opposite to that of the first electrode 100. For example, when the first electrode 100 is a positive electrode, the second electrode 200 may be a negative electrode. Conversely, when the first electrode 100 is a negative electrode, the second electrode 200 may be a positive electrode.

The first electrode 100 and the second electrode 200 shown in FIGS. 22 to 25 may be substantially the same electrodes as the electrode 100 shown in FIGS. 12, 18, and 21. Since detailed configurations and manufacturing methods of the electrode 100 shown in FIGS. 12, 18, and 21 have been described in detail with reference to FIGS. 1 to 21, detailed descriptions of the specific configurations of the first electrode 100 and the second electrode 200 will be omitted below.

According to an embodiment, when the first electrode 100 is a positive electrode and the second electrode 200 is a negative electrode, an area of the second electrode 200 may be larger than an area of the first electrode 100. Because the area of the second electrode 200 is larger than the area of the first electrode 100, a problem may arise such as a short circuit between the first electrode 100 and the second electrode 200. For example, in a process of bending the first substrate tab 120 and the second substrate tab 130 extending from one side of the first electrode 100, the first substrate tab 120 and the second substrate tab 130 may be short-circuited with the facing second electrode 200. To prevent this, the coating portion 190 may be applied to, or otherwise disposed on, the first substrate tab 120 and the second substrate tab 130.

As shown in FIG. 23, according to an embodiment, the lead tab 400 may be disposed on the non-weld region 160 (see FIG. 21) between the plurality of second weld portions 150 (see FIG. 21). The lead tab 400 can be connected to the first substrate tab 120 and the second substrate tab 130. The lead tab 400 can function as a current path of external terminals connected to the first electrode 100 and the second electrode 200, respectively.

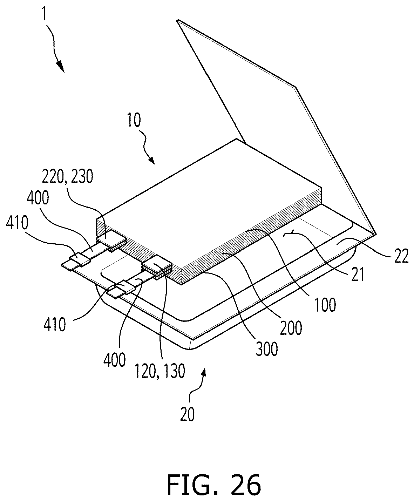

According to an embodiment, a tab film 410 can be provided on the lead tab 400. The tab film 410 may enclose both surfaces of the lead tab 400 or may be attached to both surfaces of the lead tab 400, respectively. The tab film 410 can prevent a short circuit between the lead tab 400 and a case 20 (see FIG. 26) when the electrode assembly 10 is housed in the case 20 of a secondary battery 1 (see FIG. 26).

According to an embodiment, an interval W2 in the second direction between the second weld portion 150 welded at one end and the second weld portion 150 welded at the other end may be set based on a width W3 of the lead tab 400 in the second direction (for example, the X-axis direction) (see FIG. 23). For example, based on the width W3 of the lead tab 400 in the second direction, the interval W2 in the second direction between the second weld portions 150 can be set, and a width W1 (see FIG. 6) in the second direction between the second pressing portions 1320 (see FIG. 6) of the welding head 1300 (see FIG. 6) can be set.

According to an embodiment, the lead tab 400 disposed on the non-weld region 160 (see FIG. 12) can be welded to the first substrate tab 120 and the second substrate tab 130 of the non-weld region 160. The first substrate tab 120, the second substrate tab 130, and the lead tab 400 can be welded together so that a third weld depth WD3 is formed (see FIG. 23). For example, in the first substrate tab 120 and the second substrate tab 130 welded in the first weld portion 140 (see FIG. 12) and the second weld portion 150 (see FIG. 12), surfaces thereof may be damaged by friction force in a welding connection process so that the surfaces are not flat. In contrast, surfaces of the first substrate tab 120 and the second substrate tab 130 of the non-weld region 160 that are not welded in the non-weld region 160 may be flat. By welding the first substrate tab 120 and the second substrate tab 130 of the non-weld region 160 having flat surfaces to the lead tab 400, welding strength can be improved.

According to an embodiment, one end of the lead tab 400 (for example, one end in a direction opposite to the Y-axis direction) may be disposed adjacent to the first weld portion 140 (see FIG. 12). A part of both side edges (for example, a left edge and a right edge in the X-axis direction) of the lead tab 400 may be disposed adjacent to the second weld portion 150 (see FIG. 12). Even though a width in which the region between the first substrate tab 120 and the second substrate tab 130 is welded in the first direction (the Y-axis direction) in the first weld portion 140 is narrow, a welding area of the first substrate tab 120 and the second substrate tab 130 in the second weld portion 150 can be sufficiently secured so that high welding strength can be secured. As much as a width in which the region between the first substrate tab 120 and the second substrate tab 130 is welded in the first direction (the Y-axis direction) in the first weld portion 140 becomes narrow, a region (for example, the non-weld region 160) in which the lead tab 400 can be welded can be sufficiently secured.

In an embodiment, as shown in FIG. 24, the first substrate tab 120 may include a plurality of first substrate tabs 120, and the second substrate tab 130 may include a plurality of second substrate tabs 130. In addition, the plurality of first substrate tabs 120 and the plurality of second substrate tabs 130 can be stacked in a crossing direction (e.g., they can stack up in a Z-axis direction). The plurality of first substrate tabs 120 and the plurality of second substrate tabs 130 stacked in a crossing direction in the non-weld region 160 may not be welded to each other. For example, the second region 120b of the first substrate tab 120 and the second region 130b of the second substrate tab 130 may not be welded together in the non-weld region 160. The lead tab 400 may be in contact with a surface of any one of the first substrate tab 120 and the second substrate tab 130 in the non-weld region 160. The plurality of first substrate tabs 120 and the plurality of second substrate tabs 130 that are stacked in a crossing direction without being welded together in the non-weld region 160 and the lead tab 400 can be welded together in a stacking direction (for example, a Z-axis direction). The third weld depth WD3 can be formed in a region between the plurality of first substrate tabs 120 and the plurality of second substrate tabs 130 and the lead tab 400.

As shown in FIG. 25, according to an embodiment, the second region 120b of the first substrate tab 120 and the second region 130b of the second substrate tab 130 can be welded together in the second weld portion 150. The second weld depth WD2 can be formed in the second weld portion 150 in the second region 120b of the first substrate tab 120 and the second region 130b of the second substrate tab 130. Even though the welding width in the first direction (the Y-axis direction) is narrow between the first region 120a of the first substrate tab 120 and the first region 130a of the second substrate tab 130 in the first weld portion 140, a welding area of the second region 120b of the first substrate tab 120 and the second region 130b of the second substrate tab 130 in the second weld portion 150 can be sufficiently secured. As such, welding strength can be improved in the region between the first substrate tab 120 and the second substrate tab 130.

FIG. 26 illustrates a secondary battery housing the electrode assembly according to an embodiment of the present disclosure.

Although the secondary battery 1 shown in FIG. 26 is described mainly with reference to a pouch-type battery, the embodiments are not limited thereto and may also be applied to other kinds of batteries such as prismatic batteries. However, for convenience of explanation, the following description will focus on the pouch-type battery.

With reference to FIG. 26, a secondary battery 1 according to an embodiment of the present disclosure may include an electrode assembly 10 and a case 20 that houses at least part of the electrode assembly 10. Although not shown in FIG. 26, the secondary battery 1 may further include an electrolyte that is housed in the case 20 and that permeates at least part of the electrode assembly 10.

According to an embodiment, the electrode assembly 10 may include the first electrode 100, the second electrode 200, and the separator 300. The electrode assembly 10 shown in FIG. 26 has substantially the same configuration as the electrode assembly 10 described with reference to FIGS. 22 to 25, and thus detailed descriptions thereof will be omitted below.

According to an embodiment, the case 20 may form an appearance of the secondary battery 1. The case 20 may have a rectangular parallelepiped shape as shown in FIG. 26; however, the embodiments are not limited thereto, and other shapes are within the scope of this disclosure.

According to an embodiment, the case 20 may include a housing portion 21 and a sealing portion 22.

According to an embodiment, the housing portion 21 may have an internal space larger than dimensions of the electrode assembly 10 and may house the electrode assembly 10 and the electrolyte. In a state in which the electrode assembly 10 is housed in the housing portion 21, a cover of the case 20 can be closed to seal the electrode assembly 10.

According to an embodiment, the sealing portion 22 may be provided along an edge of the case 20. In a state in which the electrode assembly 10 is housed, the sealing portion 22 provided along the edge of the case 20 may be in contact with each other and be sealed. At this time, a part of the lead tab 400 may be exposed outside the case 20, and tab film 410 may be positioned between an upper part and a lower part of the case 20 in correspondence with the sealing portion 22.

According to an embodiment, the sealing portion 22 may be made of a heat-sealable material and may have a structure in which heat-fusion layers are adhered to each other for sealing. For example, because a heat-sealable material generally has poor adhesion to metal, the tab film 410 may be attached to the lead tab 400 in a thin film form and may be fused to the case 20.

Although the present disclosure has been described above with respect to embodiments thereof, the present disclosure is not limited thereto. Various modifications and variations can be made thereto by those skilled in the art within the spirit of the present disclosure.

**<Description of Reference Symbols>**

| | | | |
|---|---|---|---|
| 1: | secondary battery | 10: | electrode assembly |
| 20: | case | 21: | housing portion |
| 22: | sealing portion | 100a: | electrode plate |
| 100: | electrode, first electrode | 110 : | electrode substrate |
| 111: | insulation layer | 112 : | first metal layer |
| 112a: | first point P1 may be a point on the non-coated portion | | |
| 113: | second metal layer | | |
| 113a: | second point P2 may be a point on the non-coated portion | | |
| 114: | electrode mixture layer | 120: | first substrate tab |
| 120a: | first region of first substrate | | |
| 120b: | second region of first substrate tab | | |
| 130: | second substrate tab | | |
| 130a: | first region of second substrate tab | | |
| 130b: | second region of second substrate tab | | |
| 140a: | first weld region | 140 : | first weld portion |
| 150a: | second weld region | 150: | second weld portion |
| 160: | non-weld region | 170a: | third weld region |
| 170: | third weld portion | 190: | coating portion |
| 200: | second electrode | 300: | separator |
| 400: | lead tab | 410: | tab film |
| 1000: | welding device | 1100: | anvil |
| 1200: | welding horn | 1300: | welding head |
| 1300: | disk-shaped welding head | 1310: | first pressing portion |
| 1320: | second pressing portion | 1320a: | circumferential pressing portion |
| 1320b: | intermediate pressing portion | | |
| 1311 , 1321: | protrusion | 1400: | body portion |

## Claims

1. A welding device (1000) comprising:
an anvil (1100); and
a welding horn (1200) configured to apply ultrasound to weld an electrode plate (100a), a first substrate tab (120), and a second substrate tab (130) together while pressing the electrode plate (100a), the first substrate tab (120), and the second substrate tab (130) on the anvil (1100),
wherein the welding horn (1200) comprises:
a disk-shaped welding head (1300); and
a body portion (1400) connected to a central axis of the disk-shaped welding head (1300), wherein the disk-shaped welding head (1300) is rotatable around the central axis,
wherein the disk-shaped welding head (1300) comprises:
a first pressing portion (1310) configured to press (1) a first region located between the electrode plate (100a) and the first substrate tab (120) between the anvil (1100) and the welding horn (1200), and (2) a second region located between the electrode plate (100a) and the second substrate tab (130) between the anvil (1100) and the welding horn (1200), and
a second pressing portion (1320) configured to press part of a third region located between the first substrate tab (120) and the second substrate tab (130) between the anvil (1100) and the welding horn (1200).

2. The welding device (1000) as claimed in claim 1, wherein the electrode plate (100a) comprises:
an insulation layer (111); and
a first metal layer (112) disposed on a first surface of the insulation layer (111), the first metal layer (112) comprising a first metal layer noncoated portion (112a); and
a second metal layer (113) disposed on a second surface of the insulation layer (111), the second metal layer (113) comprising a second metal layer noncoated portion (113a), wherein:
the first pressing portion (1310) is configured to press: (1) a fourth region located between the first metal layer noncoated portion (112a) and the first substrate tab (120) between the anvil (1100) and the welding horn (1200), and (2) a fifth region located between the second metal layer noncoated portion (113a) and the second substrate tab (130) between the anvil (1100) and the welding horn (1200).

3. The welding device (1000) as claimed in claim 1 or claim 2, wherein:
the first pressing portion (1310) is continuously formed along a circumference of an outer peripheral surface of the disk-shaped welding head (1300) while pressing the electrode plate (100a), the first substrate tab (120), and the second substrate tab (130) between the anvil (1100) and the welding horn (1200), the first pressing portion (1310) having a predetermined width; and
the second pressing portion (1320) comprises a plurality of second pressing portions (1320) that extend in pairs from the first pressing portion (1310) in a direction orthogonal to a circumferential direction of the outer peripheral surface,
the plurality of second pressing portions (1320) are spaced apart from each other by a preset distance along the circumference of the outer peripheral surface, and
a nonpressing region (1330) in which the first substrate tab (120) and the second substrate tab (130) are not pressed is formed between the plurality of second pressing portions (1320) while pressing the electrode plate (100a), the first substrate tab (120), and the second substrate tab (130) between the anvil (1100) and the welding horn (1200).

4. The welding device (1000) according to any one of the preceding claims, wherein the first pressing portion (1310) is continuously formed along a circumference of an outer peripheral surface of the disk-shaped welding head (1300) while pressing the electrode plate (100a), the first substrate tab (120), and the second substrate tab (130) between the anvil (1100) and the welding horn (1200), the first pressing portion (1310) having a predetermined first width, and
the second pressing portion (1320) comprises:
a circumferential pressing portion (1320a) formed continuously along the circumference of the outer peripheral surface while pressing the electrode plate (100a), the first substrate tab (120), and the second substrate tab (130) between the anvil (1100) and the welding horn (1200), the second pressing portion (1320) having a predetermined second width at a predetermined interval from the first pressing portion (1310) in a direction orthogonal to the circumferential direction of the outer peripheral surface; and
a plurality of intermediate pressing portions (1320b) formed along the circumference of the outer peripheral surface, the plurality of intermediate pressing portions (1320b) having a predetermined third width between the first pressing portion (1310) and the circumferential pressing portion (1320a), each of the plurality of intermediate pressing portions (1320b) being formed with a predetermined length in the circumferential direction of the outer peripheral surface, and each of the plurality of intermediate pressing portions (1320b) being disposed at a preset constant interval in the circumferential direction of the outer peripheral surface,
wherein a fourth region corresponding to the preset constant interval comprises a nonpressing region (1330) in which the first substrate tab (120) and the second substrate tab (130) are not pressed while pressing the electrode plate (100a), the first substrate tab (120), and the second substrate tab (130) between the anvil (1100) and the welding horn (1200).

5. The welding device (1000) according to any one of the preceding claims, wherein:
the first pressing portion (1310) comprises a plurality of first pressing portion protrusions (1311) protruding from an outer peripheral surface of the disk-shaped welding head (1300) at predetermined intervals; and
the second pressing portion (1320) comprises a plurality of second pressing portion protrusions (1321) protruding from the outer peripheral surface of the disk-shaped welding head (1300) at predetermined intervals.

6. The welding device (1000) as claimed in claim 5, wherein a second length of a protrusion (1321) protruding from the plurality of second pressing portion protrusions (1321) is greater than a first length of a protrusion (1311) protruding from the plurality of first pressing portion protrusions (1311).

7. The welding device (1000) according to any one of the preceding claims, wherein the second pressing portion (1320) comprises at least one segment of the second pressing portion (1320), and a number of the at least one segment of the second pressing portion (1320) is preset based on at least one of a circumferential length of the disk-shaped welding head (1300) or a length of the electrode plate (100a).

8. An electrode assembly (10) comprising:
a first electrode (100);
a second electrode (200); and
a separator (300) disposed between the first electrode (100) and the second electrode (200),
wherein at least one of the first electrode (100) or the second electrode (200) comprises:
an electrode substrate (110) comprising an insulation layer (111);
a first metal layer (112) disposed on a first surface of the insulation layer (111), the first metal layer (112) comprising a first metal layer noncoated portion (112a) where no active material is provided;
a second metal layer (113) disposed on a second surface of the insulation layer (111), the second metal layer (113) comprising a second metal layer noncoated portion (113a) where no active material is provided;
the electrode substrate (110) having a first electrode mixture layer (114) formed on a first metal layer part of the first metal layer (112) on which the active material is applied; and
the electrode substrate (110) having a second electrode mixture layer (114) formed on a second metal layer part of the second metal layer (113) on which the active material is applied;
a first substrate tab (120) extending in a first direction from a first point on the first metal layer noncoated portion (112a); and
a second substrate tab (130) extending in the first direction from a second point on the second metal layer noncoated portion (113a), the second substrate tab (130) facing the first substrate tab (120),
wherein only a part of a region between the first substrate tab (120) and the second substrate tab (130) is welded.

9. The electrode assembly (10) as claimed in claim 8, wherein:
a first region (120a) of the first substrate tab (120) is connected to the first metal layer noncoated portion (112a);
a first region (130a) of the second substrate tab (130) is connected to the second metal layer noncoated portion (113a); and
a second region (120b) of the first substrate tab (120) and a second region (130b) of the second substrate tab (130) are connected to each other, such that the first metal layer (112) and the second metal layer (113) are electrically connected,
wherein:
the first point is located on the first metal layer noncoated portion (112a), the first point separated from the first electrode mixture layer (114) of the first metal layer (112) by a predetermined distance; and
the second point is located on the second metal layer noncoated portion (113a), the second point separated from the second electrode mixture layer (114) of the second metal layer (113) by the predetermined distance.

10. The electrode assembly (10) according to any one of the preceding claims 8 or 9, wherein at least one of the first electrode (100) or the second electrode (200) further comprises:
a first weld portion (140) comprising welding in:
(1) a first region between the first metal layer noncoated portion (112a) and the first substrate tab (120); and
(2) in a second region between the second metal layer noncoated portion (113a) and the second substrate tab (130); and
a second weld portion (150) that extends in the first direction from the first weld portion (140), wherein the second weld portion (150) comprises welding in:
(3) a third region between the first substrate tab (120) and the second substrate tab (130), the third region having a predetermined width at one end and another end of the first substrate tab (120),
wherein the second substrate tab (130) is oriented in a second direction that intersects the first direction.

11. The electrode assembly (10) as claimed in claim 10, wherein the first weld portion (140) is continuously welded in:
a fourth region adjacent to the first region between the first metal layer noncoated portion (112a) and the first substrate tab (120); and
a fifth region adjacent to the second region between the second metal layer noncoated portion (113a) and the second substrate tab (130),
wherein a nonweld region (160) between the first substrate tab (120) and the second substrate tab (130) is not welded and is formed at a preset interval, the nonweld region (160) located between the second weld portion (150) at one end of the electrode substrate (110) in the second direction and the second weld portion (150) welded at another end of the electrode substrate (110) in the second direction.

12. The electrode assembly (10) as claimed in claim 11, wherein:
the first substrate tab (120) comprises a plurality of first substrate tabs (120);
the second substrate tab (130) comprises a plurality of second substrate tabs (130);
the plurality of first substrate tabs (120) and the plurality of second substrate tabs (130) are stacked in a crossing direction;
a lead tab (400) is disposed on the nonweld region (160) among the plurality of first substrate tabs (120) and the plurality of second substrate tabs (130) stacked in the crossing direction; and
the nonweld region (160) and the lead tab (400) are welded to each other.

13. The electrode assembly (10) as claimed in claim 12, wherein a space in the second direction between the second weld portion (150) welded at the one end of the electrode substrate (110) and the second weld portion (150) welded at the other end of the electrode substrate (110) is set based on a width of the lead tab (400) in the second direction.

14. The electrode assembly (10) according to any one of the preceding claims 8 to 13 when combined with claim 10, wherein at least one of the first electrode or the second electrode further comprises a third weld portion that connects, in the second direction, a plurality of second weld portions (150) that are welded at the one end of the first substrate tab (120), the other end of the first substrate tab (120), the one end of the second substrate tab (130), and the other end of the second substrate tab (130), respectively.

15. The electrode assembly (10) according to any one of the preceding claims 8 to 14 when combined with claim 10, wherein at least one of the first electrode or the second electrode further comprises a coating portion (190) in which an insulation material is coated on the first substrate tab (120) and the second substrate tab (130) in the first weld portion (140).
